# EUROPEAN PATENT APPLICATION

(11) **EP 3 438 957 A1**
(43) Date of publication of application: **06.02.2019**
(21) Application number: 18166088.7
(22) Date of filing: 06.04.2018
(51) Int. Cl.: G09F 13/08, G09F 13/04, G09F 21/04

(54) **GRAPHIC LUMINOUS DEVICE**

(30) Priority: 04.08.2017 TW 106211515 U
(71) Applicant: Depo Auto Parts Ind. Co., Ltd., Lukang Township, Changhua County 505 (TW)
(72) Inventor: CHEN, Chao-Chun, 505 Lukang Township, Changhua County (TW); LEE, Yuan-Cheng, 516 Puyan Township, Changhua County (TW)
(74) Representative: Viering, Jentschura & Partner mbB Patent- und Rechtsanwälte

(57) **Abstract**

A graphic luminous device includes a lamp holder (10), a light source (L) disposed at one side of the lamp holder (10), a light-guiding board (20) disposed on the lamp holder (10) receiving a light from the light source (L) to guide upward, a diffusion film (30) disposed on the light-guiding board (20), a shielding board (40) and an outer housing (50). The diffusion film (30) is used to uniform the light from the light-guiding board (20). The present disclosure utilizes the opaque second graphic segment (52) on the outer housing (50) and the light-penetrable first graphic segment (42) on the shielding board (40) to be overlapped to produce a contour luminous effect. The second graphic segment (52) is smaller than the first graphic segment (42), and the second graphic segment (52) is matched with the first graphic segment (42). In another way, the shielding board (40) is formed with the first graphic segment (42) and the second graphic segment (52), to produce a contour light-penetrable effect.

## Description

### BACKGROUND OF THE INVENTION

### 1. Field of the Invention

The present disclosure is related to a graphic luminous device. In particular, the present disclosure relates to a decorative device having a graphic image with a contour luminous appearance, which can be applied to, for example, a scuff-plate illumination device disposed on a stepping position of a car body when the car door is opening.

### 2. Description of Related Art

Graphic luminous devices have been applied to many purposes. For example, a car door sill pedal protector disposed on a stepping position under a door sill for a vehicle can not only illumine the door sill position for guiding purpose when one gets into or gets out of the car, but also provide a decorative function. However, the luminous characters provided by the conventional graphic luminous device are usually of solid fonts and show a planar appearance, so that the visual effect is monotonous and the stereo effect cannot be highlighted.

### SUMMARY OF THE INVENTION

One of the objectives of the present disclosure is to provide a graphic luminous device, which has a graphic image with a contour luminous appearance and further with a stereoscopic luminous effect, so as to show a graphic image with three-dimensional visual perception. In addition, it is easy to assemble.

In order to achieve the above objectives, according to one exemplary embodiment of the present disclosure, a graphic luminous device is provided, which includes a lamp holder, a light source, a shielding board, and an outer housing. The shielding board is formed with a first graphic segment. The first graphic segment is light-penetrable. The shielding board is opaque on an outside area surrounding a contour of the first graphic segment. The outer housing is disposed on the shielding board and connected to the lamp holder. The outer housing is formed with a second graphic segment. The second graphic segment is opaque and is matched with the first graphic segment. The second graphic segment has a size smaller than that of the first graphic segment. The second graphic segment is stacked above the first graphic segment, so that a graphic-contour luminous area is formed between a contour of the second graphic segment and the contour of the first graphic segment.

In order to achieve the above objectives, according to another exemplary embodiment of the present disclosure, a graphic luminous device is provided, which includes a lamp holder, a light source, a shielding board and an outer housing. The shielding board is formed with a first graphic segment of transparent area and a second graphic segment of opaque area attached thereto. The second graphic segment is disposed at an inner side of the first graphic segment. The second graphic segment is smaller than the first graphic segment, so as to form a graphic-contour luminous area between a contour of the second graphic segment and a contour of the first graphic segment. The shielding board is opaque on an outside area surrounding the contour of the first graphic segment. The outer housing is light-penetrable and disposed on the shielding board and connected to the lamp holder.

Thus, the present disclosure has the advantages that the graphic luminous device utilizes the opaque second graphic segment on the outer housing and the light-penetrable first graphic segment on the shielding board to be overlapped, and the second graphic segment is smaller than the first graphic segment, so as to produce a contour luminous effect, that is, the graphic has a luminous contour effect. In another way, the shielding board can be directly formed with a contour luminous shape of line graphic, so that the graphic luminous device shows the graphic with a three-dimensional visual perception.

For further understanding of the present disclosure, reference is made to the following detailed description illustrating the embodiments and examples of the present disclosure. The description is for illustrative purpose only and is not intended to limit the scope of the claim.

### BRIEF DESCRIPTION OF THE DRAWINGS

Fig. 1 is a three-dimensional exploded view of a graphic luminous device of a first embodiment of the present disclosure;
Fig. 1A is an enlarged view of the portion "A" in Fig. 1;
Fig. 2 is a front view of the graphic luminous device of the first embodiment of the present disclosure;
Fig. 3 is a cross-sectional view of the graphic luminous device of the first embodiment of the present disclosure;
Fig. 4 is a three-dimensional exploded view of the graphic luminous device of a second embodiment of the present disclosure;
Fig. 4A is an enlarged view of the portion "A" in Fig. 4;
Fig. 5 is a front view of the graphic luminous device of the second embodiment of the present disclosure;
Fig. 6 is a cross-sectional view of the graphic luminous device of the second embodiment of the present disclosure;
Fig. 7 is a three-dimensional exploded view of the graphic luminous device of a third embodiment of the present disclosure;
Fig. 7A is an enlarged view of the portion "A" in Fig. 7;
Fig. 8 is a front view of the graphic luminous device of a third embodiment of the present disclosure; and
Fig. 9 is a cross-sectional view of the graphic luminous device of the third embodiment of the present disclosure.

### DETAILED DESCRIPTION OF THE EXEMPLARY EMBODIMENTS

### --First Embodiment--

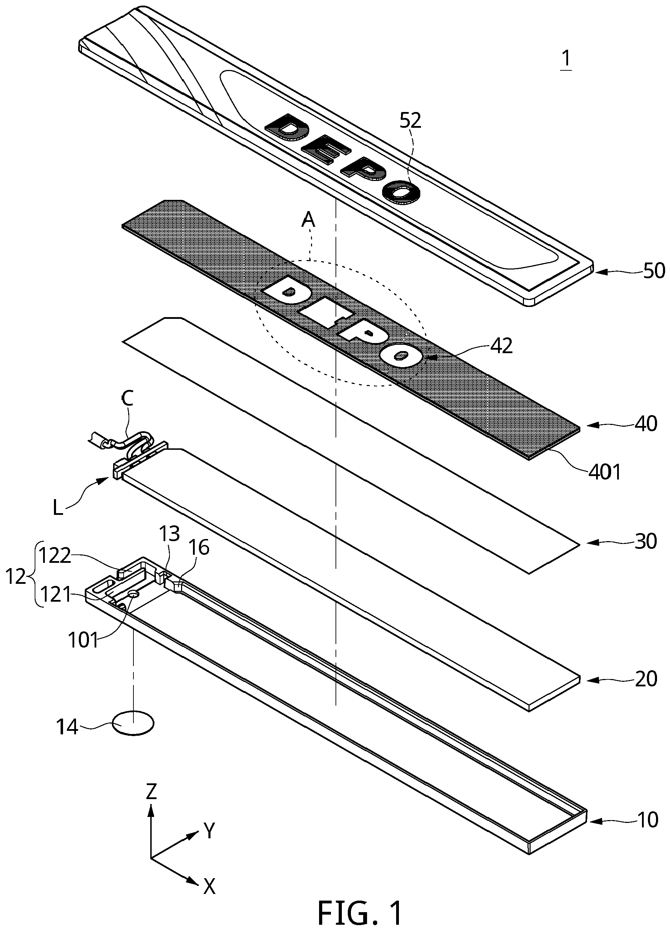

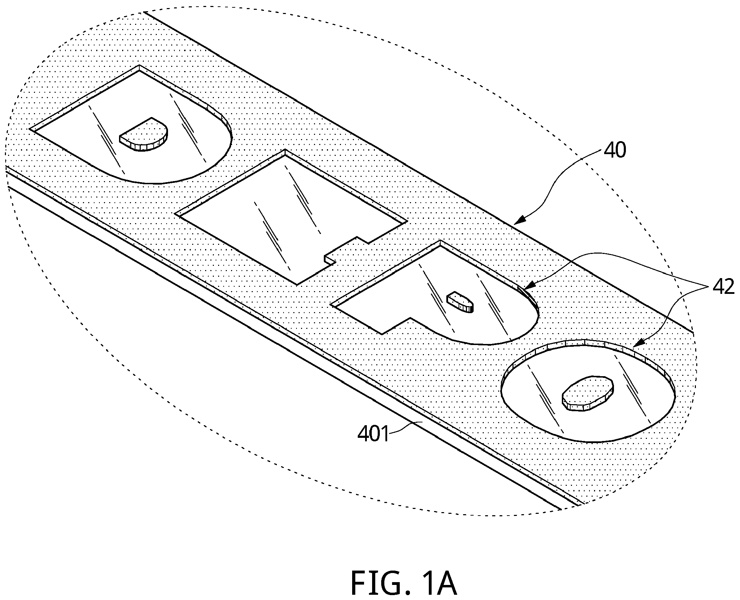

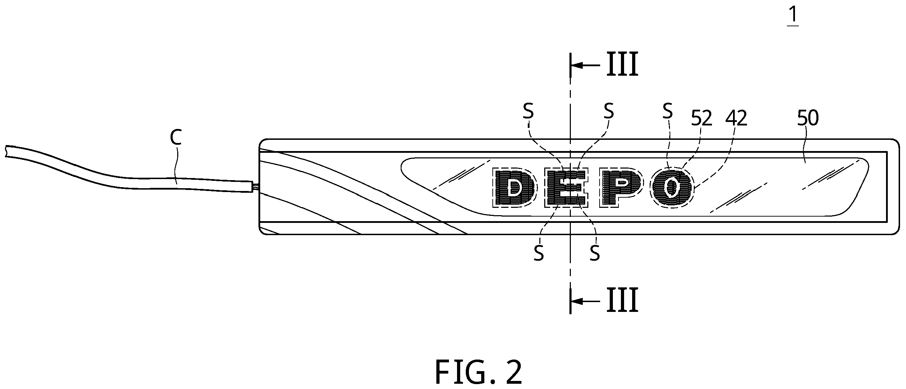

Reference is made to Fig. 1 and Fig. 2 which are a three-dimensional exploded view and a front view of a graphic luminous device according to the present disclosure. The present disclosure provides a graphic luminous device 1, which includes a lamp holder 10, a light source L, a light-guiding board 20, a diffusion film 30, a shielding board 40, and an outer housing 50. The light source L is disposed at one side of the lamp holder 10. The light-guiding board 20 is disposed on the lamp holder 10, so as to receive a light from the light source L and guide the light upward. The diffusion film 30 is disposed on the light-guiding board 20 to uniform the light from the light-guiding board 20. The shielding board 40 is disposed on the diffusion film 30. The outer housing 50 is disposed on the shielding board 40 and connected to the lamp holder 10. The light source L can be a LED light in this embodiment.

The diffusion film 30 is a light-penetrable element. The diffusion film 30 has the function of redistributing the light of the light source to a uniform surface light or another light source with a special shape. The diffusion film 30 can diffuse the light source L of the LED point light so as to achieve a uniform light effect. The diffusion film 30 can be made of a PET film. The PET film can be coated with a layer of acrylic resin emulsion added with scattering particles on a surface thereof. In another way, the PET film can be a layer of a UV photosensitive material, and then is imprinted by a steel structural roller embossed with micro-scale structure so as to transfer the micro-scale structure on the photosensitive material. After that, it is solidified by UV light.

Reference is made to Fig. 1. The shielding board 40 is formed with a first graphic segment 42. The first graphic segment 42 is light-penetrable. The outside area surrounding a contour of the first graphic segment 42 of the shielding board 40 is opaque. The outer housing 50 is formed with a second graphic segment 52. The second graphic segment 52 is opaque, which is not transparent. The other area of the outer housing 50 excluding the second graphic segment 52 is light-penetrable. The second graphic segment 52 is matched with the first graphic segment 42. The term "graphic" includes patterns, characters, or symbols. The graphic of the second graphic segment 52, in principle, is the same as that of the first graphic segment 42. The size of the second graphic segment 52 is smaller than that of the first graphic segment 42. The second graphic segment 52 is stacked and disposed above the first graphic segment 42.

By virtue of the overlapping structure of the outer housing 50 and the shielding board 40, the present disclosure can form a graphic-contour luminous area S between a contour of the second graphic segment 52 and the contour of the first graphic segment 42. The light from the diffusion film 30 passes through the graphic-contour luminous area S and is transmitted to the outer housing 50 excepting the area of the second graphic segment 52. This embodiment utilizes the outer housing 50 and the shielding board 40 to produce a contour light translucent effect. By such a stacked structure that the second graphic segment 52 is disposed on the first graphic segment 42, the shielding character of the second graphic segment 52 of the outer housing 50 is of a better stereoscopic impression.

Reference is made to Fig. 1 and Fig. 1A. Here are some examples of the shielding board 40 and the first graphic segment 42 according to the present disclosure. The shielding board 40 includes a transparent bottom layer 401, such as a transparent plastic film. An opaque shielding area is formed on the transparent bottom layer 401 of the shielding board 40 on an outside area surrounding the contour of the first graphic segment 42 by screen printing, or sprayed by a reflective paint, an opaque paint, or a dark paint. The area of the first graphic segment 42 is not painted with an opaque paint, so as to transmit light. However, the present disclosure is not limited thereto.

Another embodiment of making the first graphic segment 42 being light-penetrable is that the shielding board 40 is made of an opaque film, and then hollows out the area of the first graphic segment 42 on the shielding board 40.

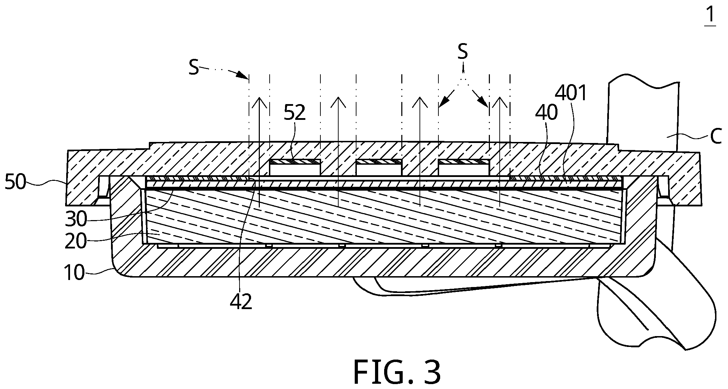

Reference is made to Fig. 1 and Fig. 3. Concerning the light-opaque structure of the second graphic segment 52 of the present embodiment, the outer housing 50 can be made of a light-penetrable material. The second graphic segment 52 is formed on an inner side of the outer housing 50 in a concave manner, so that the character graphic is of a better stereoscopic impression. In order to provide the second graphic segment 52 with an opaque visual effect, the concave area of the second graphic segment 52 can be electroplated to form an opaque character graphic. The "opaque" means a light-shading effect relative to the first graphic segment 42, but the second graphic segment 52 is not required to be fully opaque. However, the present disclosure is not limited thereto. For example, the second graphic segment 52 can be directly painted on an inner side of the outer housing 50 with a block out paint.

Reference is made to Fig. 1. The lamp holder 10 is formed with a ventilation hole 101, and the ventilation hole 101 is close to the light source L, so that the heat from the light source L can be dissipated through the ventilation hole 101. The graphic luminous device 1 further has a ventilation pad 14, which can be used to cover the ventilation hole 101.

The lamp holder 10 further includes a wire-arranging portion 12 and a lamp retaining slot 13. The wire-arranging portion 12 is formed at one side of the lamp holder 10. The lamp retaining slot 13 is formed at an inner side of the wire-arranging portion 12. The ventilation hole 101 is formed between the lamp retaining slot 13 and the wire-arranging portion 12. The lamp retaining slot 13 has a direction perpendicular to an illumination direction of the light. The wire-arranging portion 12 can restrict and fix a wire C of the light source L. In detail, the wire-arranging portion 12 of this embodiment includes a partition 121 and a wiring slot 122. The partition 121 is perpendicular to an illumination direction of the light source L. The wiring slot 122 is curved and extended to one side of the lamp holder 10.

The lamp holder 10 further includes an identification part 16. The identification part 16 is disposed at one end of the lamp retaining slot 13. In this embodiment, the identification part 16 is an inclined plane. The light-guiding board 20, the diffusion film 30, and the shielding board 40 are rectangular shape, and they can be, but are not limited thereto, an elliptic shape or other shapes. To match with the identification part 16, a slanted corner is formed on the light-guiding board 20, the diffusion film 30, and the shielding board 40 respectively. Therefore, the identification part 16 can identify the directions when assembling the light-guiding board 20, the diffusion film 30, and the shielding board 40 on the lamp holder 10.

The assembly process of this embodiment is described as follows. First, the light source L, that is the LED light, is inserted fixedly in the lamp retaining slot 13. A wire of the LED light is fixed in the wire-arranging portion 12. And then, the light-guiding board 20 is fixed in the lamp holder 10 according to its contour. The light source L aims at a short side of the light-guiding board 20. The light beams of the light source L are irradiated into the light-guiding board 20 in a direction parallel to the light-guiding board 20 (that is, in the X direction), and the light direction is changed by the light-guiding board 20, so that the light beams are irradiated along the direction perpendicular to the light-guiding board 20 (that is, in the Z direction). Then, the diffusion film 30 is disposed in the lamp holder 10 following its contour and disposed on the light-guiding board 20. The diffusion film 30 can uniform the dot lights from the light-guiding board 20. Subsequently, the shielding board 40 is disposed in the lamp holder 10 and disposed on the diffusion film 30, so that the uniform light only irradiates through the first graphic segment 42 and most of the light is shaded by the shielding board 40. Finally, the outer housing 50 is fixed on the lamp holder 10, for example, by using an adhering manner or an engaging manner. Since the second graphic segment 52 is smaller than the first graphic segment 42, the light passing through the first graphic segment 42 is blocked by the second graphic segment 52 to show a light of a line-shaped contour.

### --Second Embodiment--

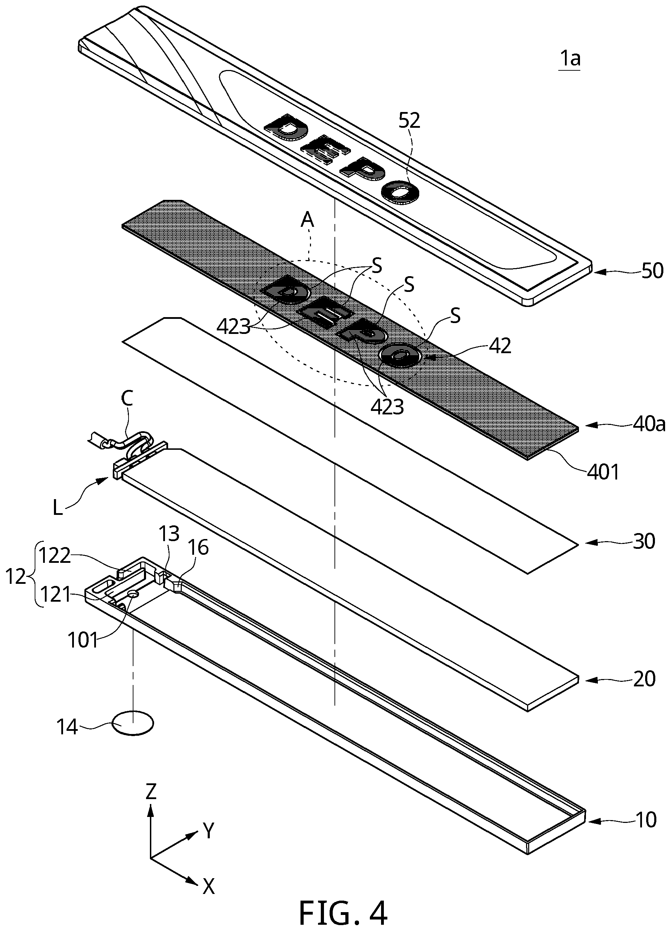

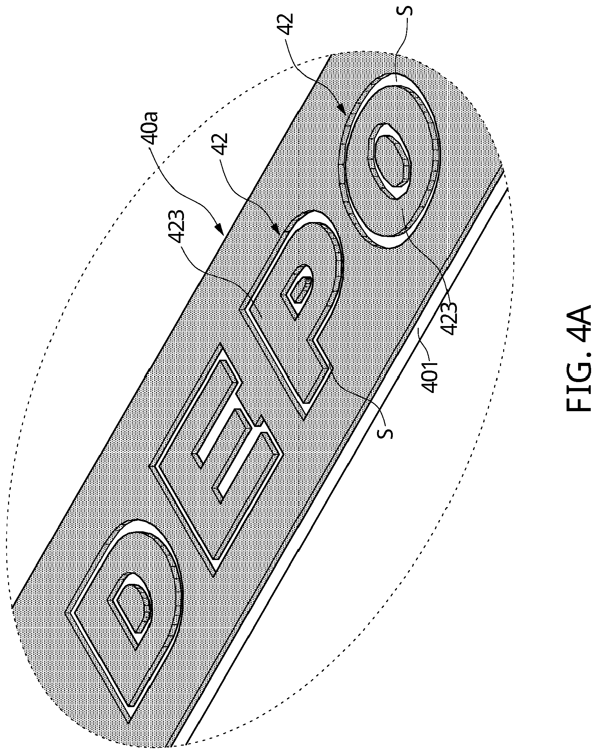

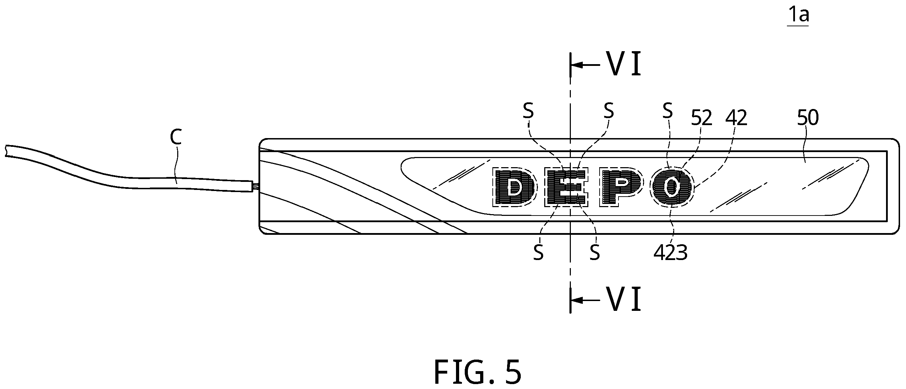

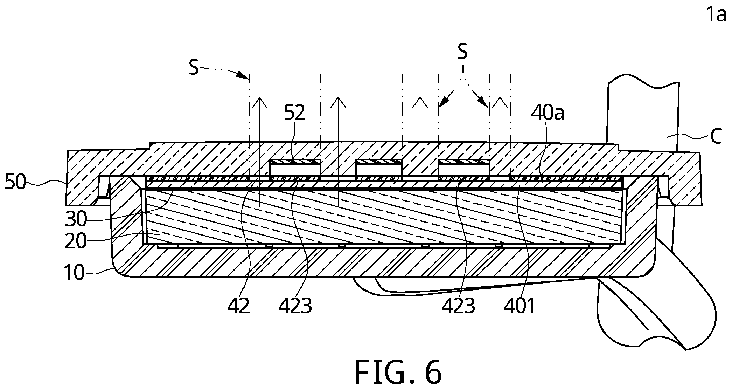

Reference is made to Fig. 4 to Fig. 6, which show the graphic luminous device of the second embodiment according to the present disclosure. The second embodiment is generally similar to the first embodiment, and the difference is that the second embodiment has a shielding board 40a. The shielding board 40a has an opaque third graphic segment 423, which is formed on the transparent first graphic segment 42 in screen printing and smaller than the first graphic segment 42. Thus, a graphic-contour luminous area S of a character shape is formed thereon. The character shape of the third graphic segment 423 is substantially similar to the second graphic segment 52 of the outer housing 50, which can enhance the characteristic of opaqueness of the second graphic segment 52 to avoid light leakage. As shown in Fig. 6, the size of the third graphic segment 423 is substantially equal to the size of the second graphic segment 52.

As shown in Fig. 6, in detail, the shielding board 40a has a transparent bottom layer 401, for example, a transparent plastic film. An opaque shading area is painted on the transparent bottom layer 401 and on an outside area surrounding a contour of the first graphic segment 42 of the shielding board 40a, by using a screen printing manner. Alternatively, a reflective paint, a block out paint, or a dark paint can be used to paint the transparent bottom layer 401. The area of the first graphic segment 42 is not painted, so as to transmit light therefrom. The third graphic segment 423 is printed inside the transparent first graphic segment 42.

### --Third Embodiment--

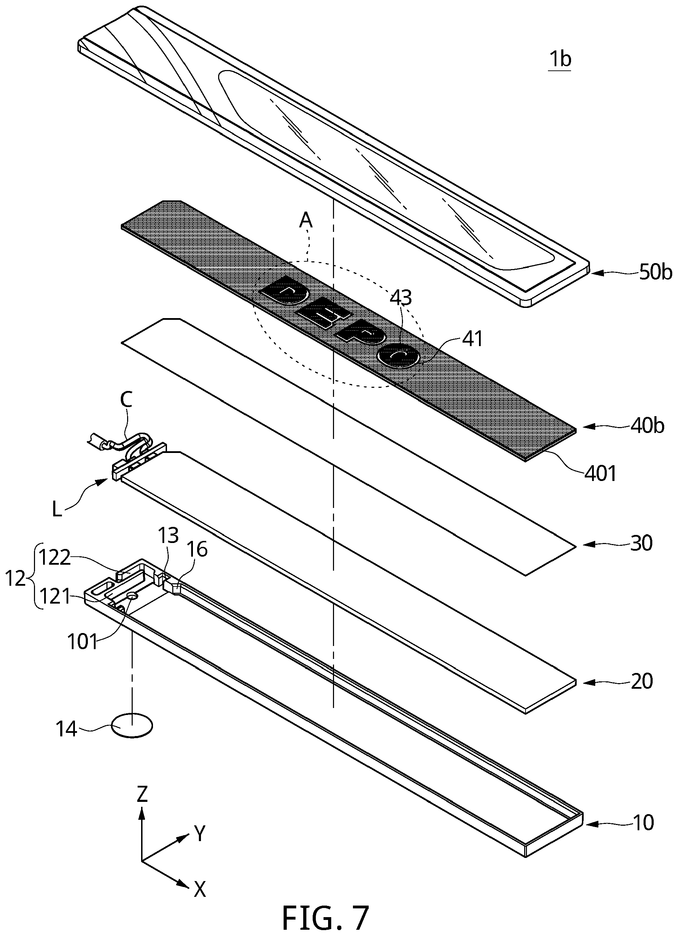

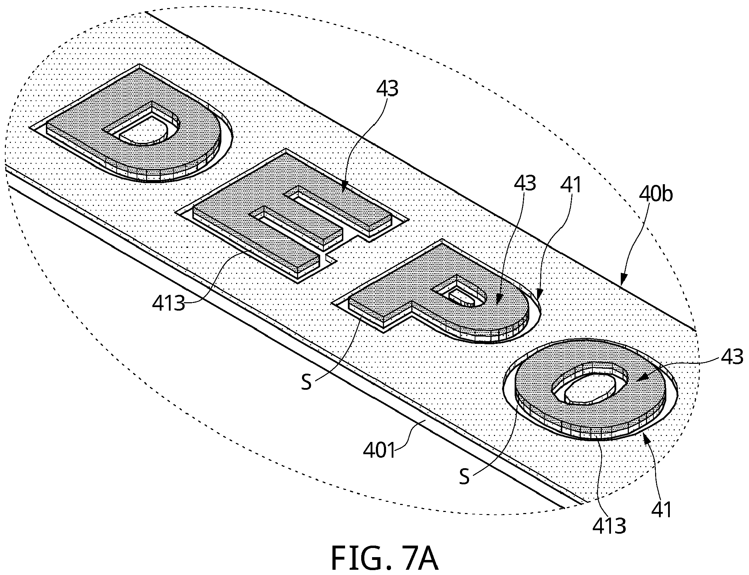

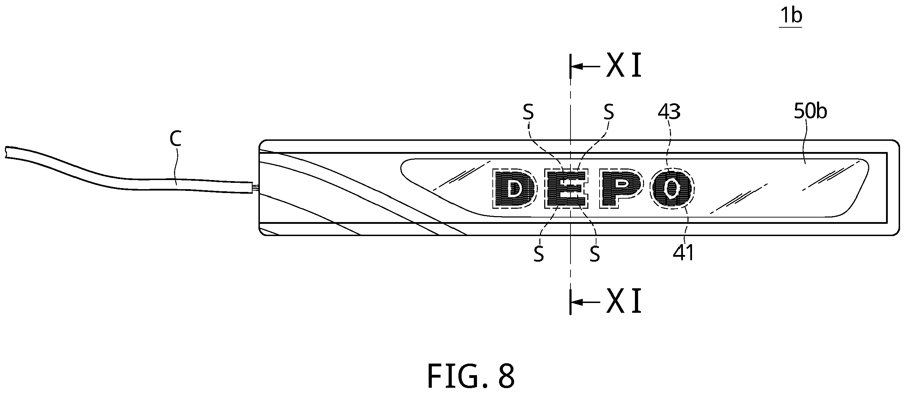

Reference is made to Fig. 7 to Fig. 9. The present disclosure further provides a graphic luminous device 1b according to the third embodiment, which also can provide a contour luminous effect like that provided in the above embodiments. The graphic luminous device 1b has the lamp holder 10, the light source L, the diffusion film 30, the shielding board 40b and the outer housing 50b. The difference between the present embodiment and the former embodiments is that, as shown in Fig. 7A, the shielding board 40b is directly formed with a line-shaped contour light effect. The shielding board 40b is disposed on the diffusion film 30. The shielding board 40b is formed with a transparent first graphic segment 41 and an opaque second graphic segment 43. The second graphic segment 43 is disposed inside the first graphic segment 41. The size of the second graphic segment 43 is smaller than the size of the first graphic segment 41, so that a graphic-contour luminous area S is formed between a contour of the second graphic segment 43 and a contour of the first graphic segment 41. The shielding board 40b is opaque on the outside area surrounding the contour of the first graphic segment 41.

The shielding board 40b has a transparent bottom layer 401, such as a transparent plastic film. An opaque shading area is painted on the transparent bottom layer 401 by screen printing on an outside area surrounding the contour of the first graphic segment 41 of the shielding board 40b.

The second graphic segment 43 can be an opaque material attached to the transparent first graphic segment 41 by high-frequency welding. The second graphic segment 43 can be slightly higher than a top surface of the shielding board 40b, so as to produce a three-dimensional graphic effect. The color of a top surface of the second graphic segment 43 can be different from that of a top surface of the shielding board 40b.

The shielding board 40b can be made in other ways. As shown in Fig. 7A, on the basis of the shielding board of the second embodiment, the second graphic segment 43 is attached to the inner graphic segment 413 which is printed on the transparent first graphic segment 41. The inner graphic segment 413 of this embodiment is similar to the third graphic segment of the second embodiment. The character pattern of the inner graphic segment 413 is substantially identical to the character pattern of the second graphic segment 43. The second graphic segment 43 can also be formed by attaching an opaque material to the inner graphic segment 413 by high-frequency welding. However, the present disclosure is not limited thereto. For example, it can be attached in an adhesive manner.

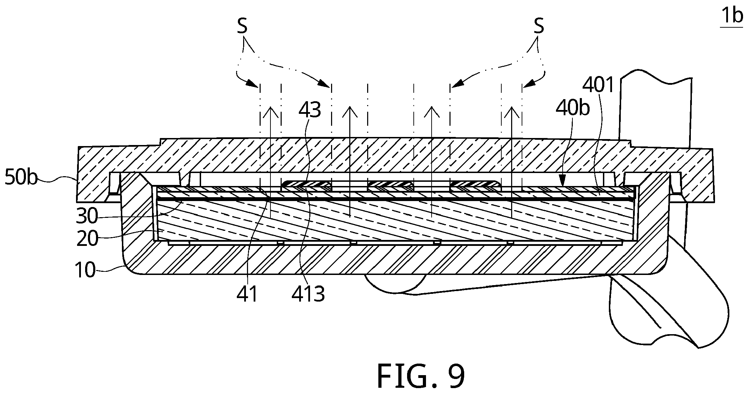

The outer housing 50b is made of a transparent material, which is different from the first embodiment. The outer housing 50b has no any graphic formed thereon. The outer housing 50b is disposed above the shielding board 40b and is connected to the lamp holder 10. As shown in Fig. 9, the light from the diffusion film 30 passes through the graphic-contour luminous area S and irradiates outside the outer housing 50b. Compared with the above embodiments, the third embodiment further has advantages of easy assembly. The graphics of the third embodiment, including the second graphic segment and the first graphic segment, are directly formed on the shielding board 40b. In other words, according to this embodiment, the second graphic segment and the first graphic segment are integrally formed on one element, and it does not need a stacked assembling process in an aligned manner, thus it can enhance the accuracy of alignment between the second graphic segment and the first graphic segment. To sum up, the present disclosure has advantages as follows. The embodiments of the present disclosure provide the graphic luminous device, which utilizes the outer housing and the shielding board to produce a contour luminous effect, so as to provide the graphic with a luminous contour effect. In another way, the shielding board 40b can be directly formed with a line of a line-shaped contour, so that the graphic luminous device shows the graphic with a three-dimensional visual perception.

The descriptions illustrated *supra* set forth simply the preferred embodiments of the present disclosure; however, the characteristics of the present disclosure are by no means restricted thereto. All changes, alterations, or modifications conveniently considered by those skilled in the art are deemed to be encompassed within the scope of the present disclosure delineated by the following claims.

## Claims

1. A graphic luminous device, comprising:
a lamp holder (10);
a light source (L);
a shielding board (40, 40a, 40b), formed with a first graphic segment (42, 41); the first graphic segment (42, 41) being light-penetrable, the shielding board (40, 40a, 40b) being opaque on an outside area surrounding a contour of the first graphic segment (42, 41); and
an outer housing (50), disposed on the shielding board (40, 40a, 40b) and connected to the lamp holder (10);
wherein the outer housing (50) or the shielding board (40a, 40b) is formed with a second graphic segment (52, 43), the second graphic segment (52, 43) being opaque, the second graphic segment (52, 43) matching with the first graphic segment (42, 41),the second graphic segment (52, 43) having a size smaller than that of the first graphic segment (42, 41), such that a graphic-contour luminous area is formed between a contour of the second graphic segment (52, 43) and the contour of the first graphic segment (42, 41).

2. The graphic luminous device as claimed in claim 1, wherein the outer housing (50) is formed with the second graphic segment (52), the second graphic segment (52) matching with the first graphic segment (42), the second graphic segment (52) being stacked above the first graphic segment (42),the outer housing (50) is light-penetrable excepting an area of the second graphic segment (52), and the second graphic segment (52) is formed in a concave manner on an inner side of the outer housing (50).

3. The graphic luminous device as claimed in claim 2, wherein the outer housing (50) has a concave area electroplated to form the second graphic segment (52) opaquely.

4. The graphic luminous device as claimed in claim 1, wherein the shielding board (40, 40a, 40b) has a transparent bottom layer (401), and the transparent bottom layer (401) is printed to form an opaque shielding area on a surface thereof and on an outside of the contour of the first graphic segment (42, 41).

5. The graphic luminous device as claimed in claim 1, wherein the first graphic segment (42) is transparent, and the shielding board (40a) is printed opaquely to form a third graphic segment (423) smaller than the first graphic segment (42), so as to form a graphic-contour luminous area into a shape of character pattern on the shielding board (40a), wherein the third graphic segment (423) has a character pattern substantially identical to the second graphic segment (52) on the outer housing (50).

6. The graphic luminous device as claimed in claim 1, wherein the shielding board (40b) is formed with the second graphic segment (43), the second graphic segment (43) disposed within the first graphic segment (41), the second graphic segment (43) is made of an opaque material and attached to the first graphic segment (41) by high-frequency welding.

7. The graphic luminous device as claimed in claim 6, wherein a top end of the second graphic segment (43) is higher than an upper surface of the shielding board (40b).

8. The graphic luminous device as claimed in claim 6, further comprising an inner graphic segment (413) printed in the transparent first graphic segment (41), wherein the second graphic segment (43) is attached to the inner graphic segment (413), the inner graphic segment (413) having a character pattern substantially identical to a character pattern of the second graphic segment (43).
